# EUROPEAN PATENT APPLICATION

(11) **EP 4 640 464 A1**
(43) Date of publication of application: **29.10.2025**
(21) Application number: 23904813.5
(22) Date of filing: 24.08.2023
(51) Int. Cl.: B60K 11/02, B60K 11/04, B60L 9/18, F02F 1/00, F02F 1/10, F02F 1/18, B60K 1/00

(54) **VEHICLE MANUFACTURING METHOD**

(30) Priority: 21.12.2022 JP 2022204506
(71) Applicant: Jatco Ltd., Shizuoka 417-8585 (JP)
(72) Inventor: ISENO, Atsumu, Fuji-shi, Shizuoka 417-8585 (JP); YOKOYAMA, Kazuhiko, Fuji-shi, Shizuoka 417-8585 (JP); OIKAWA, Shota, Fuji-shi, Shizuoka 417-8585 (JP); ISHII, Shigeru, Fuji-shi, Shizuoka 417-8585 (JP)
(74) Representative: Hoefer & Partner Patentanwälte mbB
(86) International application number: PCT/JP2023/030492
(87) International publication number: WO 2024/134986

(57) **Abstract**

[PROBLEMS] To make it possible to effectively utilize the layout of the vehicle before modification when remanufacturing an electric vehicle including a motor from a vehicle including an engine.

[SOLUTIONS] A method for manufacturing a vehicle, the method includes: a preparation step of preparing an engine block capable of accommodating engine parts, and a motor unit including a motor and a motor housing accommodating the motor; and a supporting step of supporting the motor unit with the engine block.

## Description

### TECHNICAL FIELD

The present invention relates to a method for manufacturing a vehicle.

### BACKGROUND ART

Patent Document 1 discloses a method for remanufacturing (modifying) an electric vehicle including a motor from a vehicle including an internal combustion engine (engine).

### PRIOR ART DOCUMENT

### PATENT DOCUMENT

PATENT DOCUMENT 1: JP 2010-252584 A

### SUMMARY OF INVENTION

### PROBLEM TO BE SOLVED BY THE INVENTION

In the above method, when replacing the engine with the motor, it is necessary to newly develop a large amount of parts so as to fit layout of the vehicle before modification. In other words, there is a problem that the layout of the vehicle before modification cannot be effectively utilized.

The present invention has been made in consideration of such a technical problem, and an object thereof is to make it possible to effectively utilize the layout of the vehicle before modification when remanufacturing an electric vehicle including a motor from a vehicle including an engine.

### MEANS FOR SOLVING THE PROBLEM

According to an aspect of the present invention, there is provided a method for manufacturing a vehicle, the method comprising: a preparation step of preparing an engine block capable of accommodating engine parts, and a motor unit including a motor and a motor housing accommodating the motor; and a supporting step of supporting the motor unit with the engine block.

### EFFECT OF THE INVENTION

In the above aspect, the engine is not replaced with the motor unit together with the engine block, but the engine block is left and the motor unit is supported by the engine block. Since the engine block is designed to fit parts around the engine in the vehicle before modification, by having the motor unit supported by the engine block, the layout of the vehicle before modification can be effectively utilized.

### BRIEF DESCRIPTION OF DRAWINGS

[FIG. 1] FIG. 1 is a schematic diagram of a vehicle manufactured by a method for manufacturing a vehicle according to an embodiment of the present invention.
[FIG. 2] FIG. 2 is a skeleton diagram of a motor unit.
[FIG. 3] FIG. 3 is a schematic diagram illustrating a state in which the motor unit is supported by an engine block.
[FIG. 4] FIG. 4 is a schematic diagram of a damper structure as viewed from an auxiliary machine side.
[FIG. 5] FIG. 5 is a schematic diagram illustrating a state in which an oil flow path of the motor unit is connected to a heat exchanger.
[FIG. 6] FIG. 6 is a flowchart illustrating a procedure for manufacturing a vehicle.
[FIG. 7] FIG. 7 is a diagram for explaining the procedure for manufacturing a vehicle.
[FIG. 8] FIG. 8 is a schematic diagram illustrating an example of a mount portion provided on the engine block.

### DESCRIPTION OF EMBODIMENTS

Hereinafter, a method for manufacturing a vehicle 200 according to an embodiment of the present invention will be described with reference to the accompanying drawings.

First, the vehicle 200 manufactured by a method for manufacturing the vehicle 200 according to the embodiment of the present invention will be described.

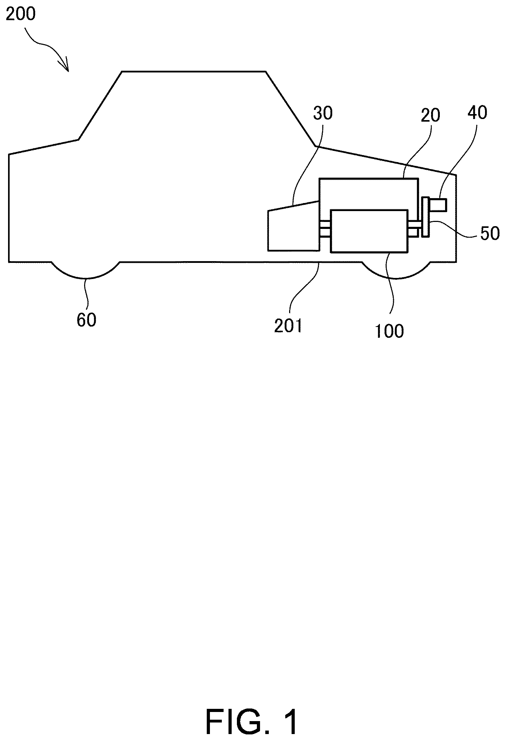

FIG. 1 is a schematic diagram of the vehicle 200.

The vehicle 200 is a so-called conversion electric vehicle (EV) in which a vehicle driven by an engine, which is an internal combustion engine, has been modified so that the vehicle is driven by a motor unit 100 instead of the engine. Note that the modification is remanufacturing of an object, and a method for modification is nothing other than a method for producing (manufacturing) an object.

As shown in FIG. 1, the vehicle 200 includes an engine block 20, a motor unit 100, a transmission 30, an auxiliary machine 40, a power transmission mechanism 50, and drive wheels 60.

The engine block 20 is connected to a vehicle body 201 via an engine mount (not shown). The engine block 20 accommodates engine parts in the vehicle before modification.

The engine parts are parts that constitute the internal combustion engine. For example, engine pistons or crankshafts or other parts are the engine parts. The engine pistons and crankshafts include portions accommodated in the engine block 20.

The motor unit 100 is supported by the engine block 20.

The transmission 30 shifts an output rotation of the motor unit 100 and transmits the output rotation to the drive wheels 60. In the present embodiment, the transmission 30 is an automatic transmission. However, the transmission 30 may also be a manual transmission.

In the present embodiment, the drive wheels 60 are rear wheels of the vehicle 200. However, the drive wheels 60 may be front wheels of the vehicle 200.

The auxiliary machine 40 is driven by the output rotation of the motor unit 100 transmitted via the power transmission mechanism 50. The auxiliary machine 40 is, for example, an alternator that is rotated to generate electricity. The power transmission mechanism 50 may be a belt power transmission mechanism, a chain power transmission mechanism, or a gear power transmission mechanism.

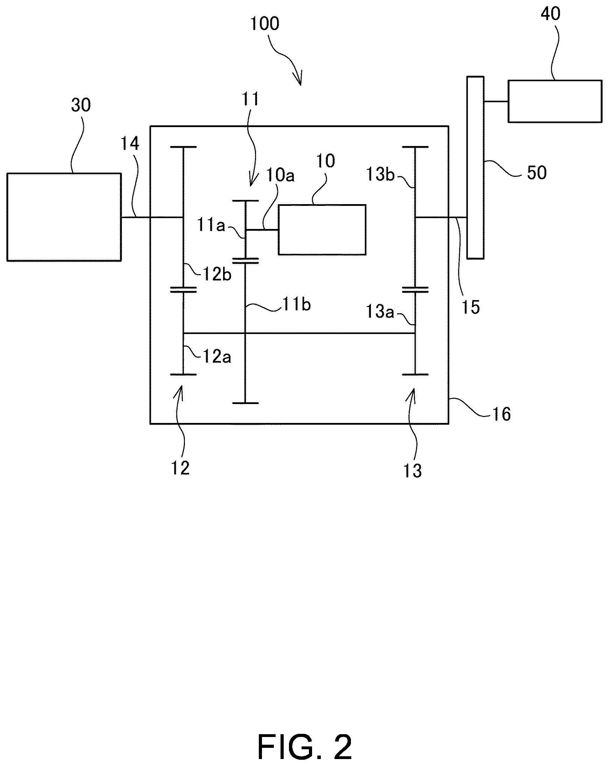

FIG. 2 is a skeleton diagram of the motor unit 100.

As shown in FIG. 2, the motor unit 100 includes a motor 10, a first gear train 11, a second gear train 12, a third gear train 13, an output shaft 14, an output shaft 15, and a motor housing 16.

The motor 10 is a rotary electric machine that has a function as an electric motor that is rotationally driven by receiving power supplied from a battery, and a function as a power generator that generates electric power by being rotated by an external force. When regenerative control is being performed, the motor 10 functions as a power generator.

The first gear train 11 includes a first gear 11a provided on an output shaft 10a of the motor 10, and a second gear 11b meshing with the first gear 11a. The first gear train 11 is a deceleration mechanism that decelerates the output rotation of the motor 10.

The second gear train 12 includes a third gear 12a that rotates integrally with the second gear 11b, and a fourth gear 12b that meshes with the third gear 12a. The second gear train 12 is a deceleration mechanism that decelerates the output rotation of the motor 10.

The third gear train 13 includes a fifth gear 13a that rotates integrally with the second gear 11b, and a sixth gear 13b that meshes with the fifth gear 13a. The third gear train 13 is a deceleration mechanism that decelerates the output rotation of the motor 10.

The output shaft 14 rotates integrally with the fourth gear 12b and outputs the rotation of the motor 10 that has been decelerated by the first gear train 11 and the second gear train 12. In the present embodiment, the rotation of the output shaft 14 is transmitted to a torque converter (not shown) of the transmission 30.

The output shaft 15 rotates integrally with the sixth gear 13b, and outputs the rotation of the motor 10 that has been decelerated by the first gear train 11 and the third gear train 13. In the present embodiment, the rotation of the output shaft 15 is transmitted to the auxiliary machine 40 via the power transmission mechanism 50.

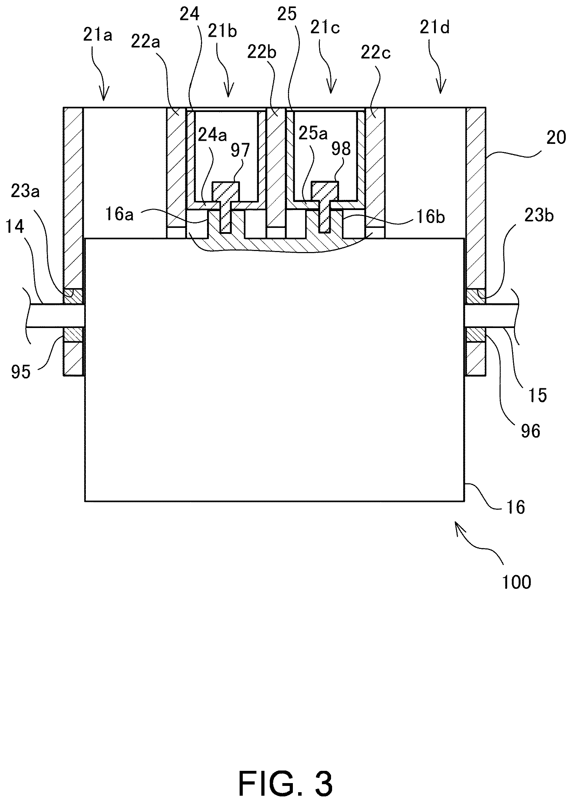

FIG. 3 is a schematic diagram illustrating a state in which the motor unit 100 is supported by the engine block 20.

As shown in FIG. 3, the engine block 20 is provided therein with piston accommodating portions 21a, 21b, 21c, and 21d, and crankshaft support walls 22a, 22b, and 22c. In the following, when the piston accommodating portions are not individually specified, they are referred to as a piston accommodating portion 21, and when the crankshaft support walls are not individually specified, they are referred to as a crankshaft support wall 22.

The piston accommodating portion 21 accommodates an engine piston in the vehicle before modification. In the vehicle before modification, the crankshaft support wall 22 supports a crankshaft together with openings 23a, 23b that open to the outside of the engine block 20.

The motor unit 100 is disposed in a space formed by removing a part of the plurality of crankshaft support walls 22 by cutting or the like.

Specifically, in the motor unit 100, the output shaft 14 is supported at the opening 23a via a bearing 95. The output shaft 15 is supported at the opening 23b via a bearing 96.

At least a part of the plurality of crankshaft support walls 22 may be removed depending on a shape of the motor unit 100. Note that, for example, even if a part of the crankshaft support wall 22a is removed but no parts of the crankshaft support walls 22b and 22c are removed, or even if a part of the crankshaft support wall 22b is removed but no parts of the crankshaft support walls 22a and 22c are removed, it also can be said that at least a part of the plurality of crankshaft support walls 22 is removed.

The motor housing 16 of the motor unit 100 is fixed to a fixing member 24 accommodated in the piston accommodating portion 21b and a fixing member 25 accommodated in the piston accommodating portion 21c.

In the present embodiment, the fixing members 24, 25 are bottomed cylindrical members, and a bottom 24a of the fixing member 24 and a fixing portion 16a of the motor housing 16 are connected by a bolt 97, and a bottom 25a of the fixing member 25 and a fixing portion 16b of the motor housing 16 are connected by a bolt 98.

In this way, in the motor unit 100, the output shafts 14, 15 are supported at the openings 23a, 23b capable of supporting a crankshaft. By fixing the motor housing 16 to the fixing members 24, 25 accommodated in the piston accommodating portions 21b, 21c, the motor housing 16 is supported by the piston accommodating portions 21b, 21c.

In this way, the piston accommodating portions 21b, 21c can receive a reaction force generated when the motor 10 rotates. In other words, rotation of the motor unit 100 around the output shafts 14, 15 as rotation axes is restricted. Since a point where the reaction force is received can be moved away from the rotation axes, the force received by the piston accommodating portions 21b and 21c can be reduced. In other words, by increasing a distance from the rotation axes to the point where the force is received, it is possible to receive a greater force. Furthermore, in the present embodiment, since an engine structure of the vehicle before modification is utilized, the number of parts to be newly developed can be reduced.

Note that a support structure for supporting the motor unit 100 by the piston accommodating portions 21b, 21c is not essential, and the reaction force generated when the motor 10 rotates may be received by other support structures or the like.

In the present embodiment, two fixing members (fixing members 24, 25) are provided. In this way, the piston accommodating portions 21b, 21c can receive the reaction force generated when the motor 10 rotates in a wellbalanced manner. However, the number of fixing members can be changed as appropriate. It is also possible to appropriately change which of the piston accommodating portions 21a to 21d is provided with the fixing member. Even when the engine installed in the vehicle before modification is other than a four-cylinder engine, the above support structure in which the motor unit 100 is supported by the piston accommodating portion can be adopted.

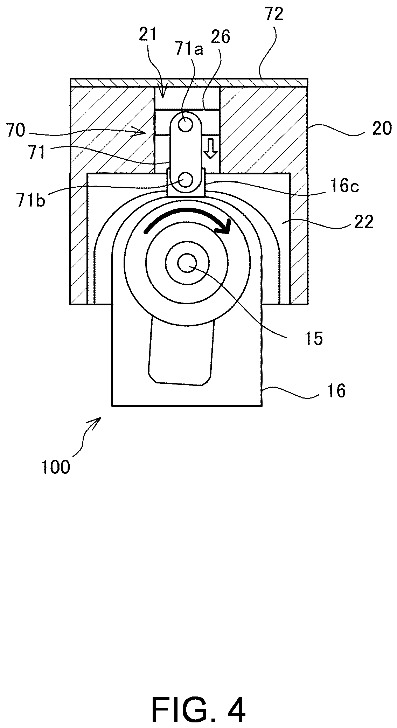

A damper structure 70 (see FIG. 4) for damping the fixing member accommodated in the piston accommodating portion 21 may be provided.

Examples of the damper structure 70 include an air damper structure that generates a damping function by air pressure by sealing the piston accommodating portion 21, and a spring damper structure that generates a damping function by utilizing a biasing force of a spring. The air damper structure may utilize a positive pressure or may utilize a negative pressure. The spring damper structure may utilize a compression spring or a tension spring. The damper structure 70 is not limited to any particular structure.

FIG. 4 is a schematic diagram of the damper structure 70 as viewed from the auxiliary machine 40 side. FIG. 4 shows an air damper structure as an example of the damper structure 70.

The damper structure 70 shown in FIG. 4 includes a fixing member 26 accommodated in the piston accommodating portion 21, a link mechanism 71 that connects and fixes the fixing member 26 to a fixing portion 16c of the motor housing 16, and a cover 72 that seals an upper opening of the piston accommodating portion 21.

The link mechanism 71 is connected to the fixing member 26 by a swing shaft 71a, and is connected to the fixing portion 16c of the motor housing 16 by a swing shaft 71b.

As a result, when the motor unit 100 swings around a rotation axis due to the reaction force generated when the motor 10 rotates (see the solid arrow), the fixing member 26 is pulled downward by the link mechanism 71 (see the hollow arrow).

Here, a space between the fixing member 26 and the cover 72 in the piston accommodating portion 21 is sealed by the fixing member 26 and the cover 72. Therefore, the damping function of the air pressure (negative pressure) prevents the fixing member 26 from being displaced. That is, the motor unit 100 is prevented from swinging.

In this way, by providing the damper structure 70, the reaction force generated when the motor 10 rotates can be damped. Therefore, vibrations and impacts can be reduced, thereby reducing shock to an occupant of the vehicle 200. Furthermore, in the present embodiment, since the damper structure 70 is provided by utilizing the engine structure of the vehicle before modification, so that the number of parts to be newly developed can be reduced.

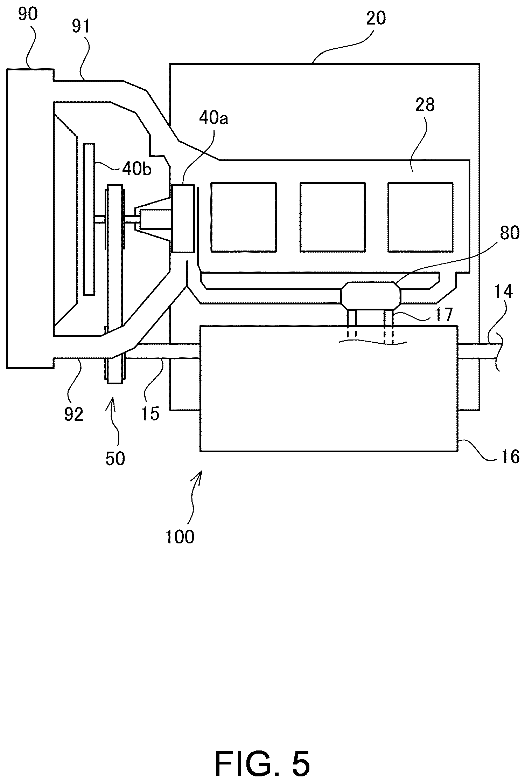

FIG. 5 is a schematic diagram illustrating a state in which an oil flow path 17 of the motor unit 100 is connected to a heat exchanger 80.

As shown in FIG. 5, the engine block 20 includes a coolant flow path 28 through which a coolant flows. The coolant flow path 28 is connected to a radiator 90 via radiator hoses 91, 92. The coolant flow path 28, the radiator 90, and the radiator hoses 91, 92 form a coolant circuit through which the coolant circulates. The coolant is, for example, cooling water, but is not limited thereto.

In FIG. 5, a water pump 40a and a fan 40b are shown as the auxiliary machines 40 that are driven by the motor unit 100 via the power transmission mechanism 50.

The motor unit 100 includes an oil flow path 17 through which oil flows. The oil flow path 17 is connected to the heat exchanger 80. The heat exchanger 80 exchanges heat with the coolant flowing through the coolant circuit. In this way, the oil flowing through the oil flow path 17 is cooled.

In FIG. 5, the oil flow path 17 is connected directly to the heat exchanger 80. However, the oil flow path 17 may be connected to the heat exchanger 80 via an oil flow path provided in the engine of the vehicle before modification.

The heat exchanger 80 may reuse a heat exchanger that is provided in the vehicle before modification, or may be a new heat exchanger.

In this way, by utilizing the existing coolant flow path 28 provided in the engine block 20, a workload required to design a new structure for cooling the oil in the motor unit 100 can be reduced. Therefore, a burden of designing the motor unit 100 can be reduced.

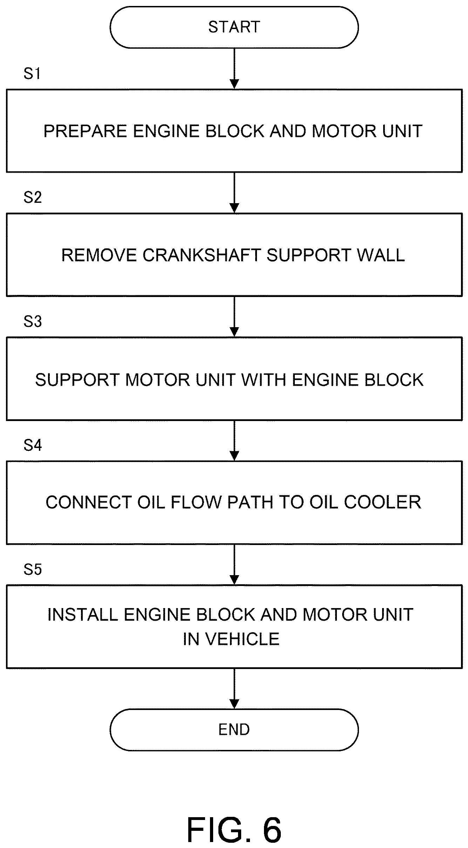

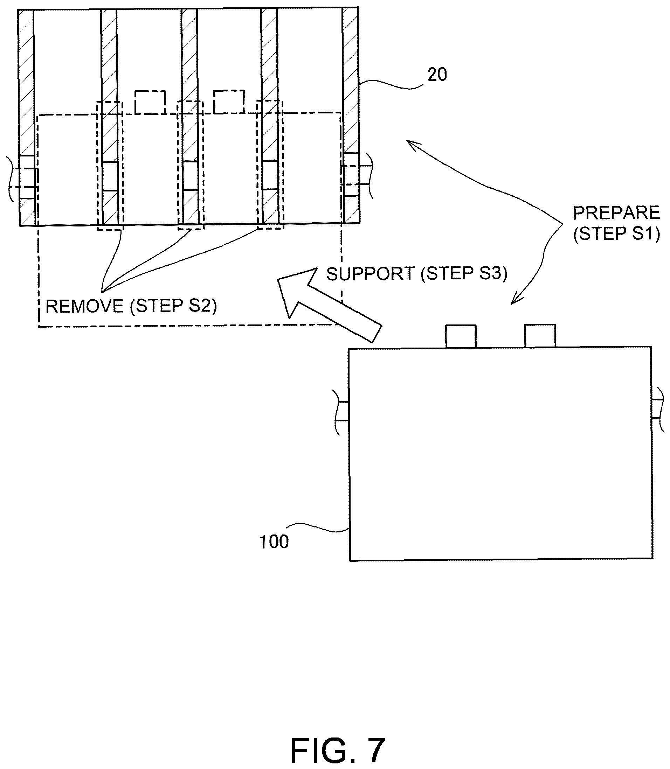

Next, a method for manufacturing the vehicle 200 will be described. FIG. 6 is a flowchart illustrating a procedure for manufacturing the vehicle 200. FIG. 7 is a diagram for explaining the procedure for manufacturing the vehicle 200.

In step S1 (preparation step), as shown in FIG. 7, the engine block 20 and the motor unit 100 are prepared.

The engine block 20 is a component of the engine that is installed in the vehicle before modification. Note that the engine block 20 may be newly prepared.

In step S2 (removing step), at least a part of the crankshaft support wall 22 provided inside the engine block 20 is removed. Specifically, in the present embodiment, the portion surrounded by the dashed line in FIG. 7 is removed by cutting or the like. In the present embodiment, a shape of the crankshaft support wall 22 after a part thereof is removed by cutting or the like is an arch shape that conforms to the shape of the motor unit 100, as shown in FIG. 4. Note that all of the plurality of crankshaft support walls 22 may be removed.

In step S3 (supporting step), the motor unit 100 is supported by the engine block 20 so that the motor unit 100 is disposed at the position indicated by the two-dot chain line in FIG. 7. As a result, the motor unit 100 is accommodated in a space formed by removing a part of the plurality of crankshaft support walls 22.

The fixing members 24, 25 (see FIG. 3) are accommodated in the piston accommodating portions 21b, 21c from the upper openings thereof after the output shafts 14, 15 are supported at the openings 23a, 23b. Thereafter, the fixing members 24, 25 and the motor housing 16 are fixed together with the bolts 97, 98.

The fixing members 24, 25 and the motor housing 16 may be connected in advance before the output shafts 14, 15 are supported at the openings 23a, 23b. In this case, however, high precision is required in positioning the fixing members 24, 25 relative to the motor housing 16. By attaching the fixing members 24, 25 after the output shafts 14, 15 are supported at the openings 23a, 23b, the fixing members 24, 25 can be attached easily.

When the air damper structure shown in FIG. 4 is provided as the damper structure 70, the motor housing 16 is connected and fixed to the fixing member 26 by the link mechanism 71 before the output shafts 14, 15 are supported at the openings 23a, 23b. Then, after the output shafts 14, 15 are supported at the openings 23a, 23b, the cover 72 is attached to the engine block 20.

In step S4 (connecting step), the oil flow path 17 is connected to the heat exchanger 80 (see FIG. 5).

Note that, the connecting step may be performed before the output shafts 14, 15 of the motor unit 100 are supported at the openings 23a, 23b of the engine block 20, or after the output shafts 14, 15 of the motor unit 100 are supported at the openings 23a, 23b of the engine block 20.

In step S5 (installing step), the engine block 20 and the motor unit 100 are installed in the vehicle 200 (see FIG. 1).

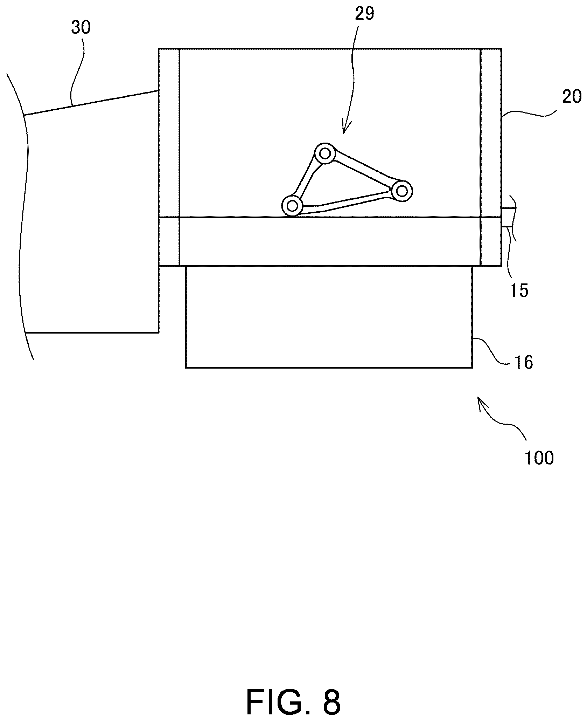

In the vehicle before modification, the engine block 20 is designed to fit the parts around the engine. For example, as shown in FIG. 8, the engine block 20 of the present embodiment has a mount portion 29 including three bosses, each of which is formed with a female screw. The mount portion 29 can be connected to the vehicle body 201 via an engine mount. Therefore, by utilizing the existing mount portion 29 and the like provided in the engine block 20, the engine block 20 and the motor unit 100 can be easily installed in the vehicle 200.

Main functions and effects of the method for manufacturing the vehicle 200 according to the embodiment of the present invention will be summarized below.
(1) The method for manufacturing the vehicle 200 includes the preparation step of preparing the engine block 20 capable of accommodating the engine parts, and the motor unit 100 including the motor 10 and the motor housing 16 accommodating the motor 10; and a supporting step of supporting the motor unit 100 by the engine block 20.

Accordingly, the engine is not replaced with the motor unit 100 together with the engine block 20, but the engine block 20 is left and the motor unit 100 is supported by the engine block 20. Since the engine block 20 is designed to fit parts around the engine in the vehicle before modification, by having the motor unit 100 supported by the engine block 20, the layout of the vehicle before modification can be effectively utilized.

(2) The engine block 20 includes the openings 23a, 23b capable of supporting crankshafts, and in the supporting step, the output shafts 14, 15 of the motor unit 100 are supported at the openings 23a, 23b of the engine block 20.

In the vehicle before modification, arrangement of the transmission 30 and the like is designed to match an axial position of the crankshafts. Therefore, by supporting the output shafts 14, 15 of the motor unit 100 in accordance with the positions of the openings 23a, 23b that support the crankshafts, it is possible to minimize a scale of modification of the transmission 30, for example. In other words, the layout of the vehicle before modification can be effectively utilized.

(3) The engine block 20 includes the mount portion 29 connected to the vehicle body 201.

The mount portion that is connected to the vehicle body is designed to fit the overall shape and structure of the vehicle, and is in a completely different position depending on a vehicle model. If a mount portion is to be provided in the motor housing, it is necessary to design the mount portion of the motor housing according to the type of the vehicle before modification. On the other hand, according to the present embodiment, since the motor unit 100 is supported at the openings 23a, 23b of the engine block 20 that supports the crankshafts, and the engine block 20 includes the mount portion 29, there is no need to design the motor unit 100 to include a separate mount portion. Accordingly, a design burden of designing the mount portion of the motor unit according to the vehicle model can be reduced.

(4) At least a part of the plurality of crankshaft support walls 22 (22a, 22b, 22c) provided inside the engine block 20 is removed, and then the supporting step is performed.

By removing the plurality of crankshaft support walls 22, the space for disposing the motor unit 100 can be ensured inside the engine block 20. Therefore, an amount by which the motor unit 100 protrudes from the engine block 20 can be reduced, which contributes to miniaturization. Note that by removing the crankshaft support walls so as to fit the shape of the motor unit, it is no longer necessary to design an external shape of the motor housing of the motor unit for the engine block, which differs depending on the vehicle model. Therefore, a burden of designing the motor unit can be reduced.

(5) The vehicle 200 includes the heat exchanger 80, the engine block 20 includes the coolant flow path 28 through which the coolant to be supplied to the heat exchanger 80 flows, and the motor unit 100 includes the oil flow path 17 through which the oil flows. The method for manufacturing the vehicle 200 includes the connecting step of connecting the oil flow path 17 to the heat exchanger 80.

By utilizing the existing coolant flow path 28 provided in the engine block 20, the workload required to design a new structure for cooling (heatexchanging) the oil in the motor unit 100 can be reduced. Therefore, the burden of designing the motor unit 100 can be reduced. The heat exchanger 80 can reuse the heat exchanger that is provided in the vehicle before modification, thereby reducing a cost thereof. The cost can also be reduced by reusing the pump (water pump) that circulates the coolant, the radiator that cools the coolant and the like in the vehicle before modification.

(6) The engine block 20 includes the piston accommodating portion 21 (21a, 21b, 21c) capable of accommodating the engine piston, and by accommodating the fixing members (24, 25, 26) in the piston accommodating portion 21, and fixing the motor housing 16 of the motor unit 100 to the fixing members (24, 25, 26), the motor unit 100 is supported by the engine block 20.

In this way, the piston accommodating portion 21 can receive the reaction force generated when the motor 10 rotates. In other words, the rotation of the motor unit 100 around the output shafts 14, 15 as the rotation axes is restricted. Since a point where the reaction force is received can be moved away from the rotation axes, the force received by the piston accommodating portion 21 can be reduced. In other words, by increasing a distance from the rotation axes to the point where the force is received, it is possible to receive a greater force. Furthermore, in the present embodiment, since an engine structure of the vehicle before modification is utilized, the number of parts to be newly developed can be reduced.

(7) The damper structure 70 for damping the fixing member 26 in the piston accommodating portion 21 is provided.

By providing the damper structure 70, the reaction force generated when the motor 10 rotates can be damped. Therefore, vibrations and impacts can be reduced, thereby reducing shock to an occupant of the vehicle 200. Furthermore, in the present embodiment, since the damper structure 70 is provided by utilizing the engine structure of the vehicle before modification, so that the number of parts to be newly developed can be reduced.

Although the embodiment of the present invention has been described above, the above embodiment merely exemplifies application examples of the present invention and does not intend to limit the technical scope of the present invention to the specific configurations of the above embodiment.

### DESCRIPTION OF REFERENCE SIGNS

- 10: motor
- 14: output shaft
- 15: output shaft
- 16: motor housing
- 17: oil flow path
- 20: engine block
- 21a: piston accommodating portion
- 21b: piston accommodating portion
- 21c: piston accommodating portion
- 21d: piston accommodating portion
- 22a: crankshaft support wall
- 22b: crankshaft support wall
- 22c: crankshaft support wall
- 23a: opening
- 23b: opening
- 24: fixing member
- 25: fixing member
- 26: fixing member
- 28: coolant flow path
- 29: mount portion
- 70: damper structure
- 80: heat exchanger
- 200: vehicle
- 201: vehicle body
- 100: motor unit

## Claims

1. A method for manufacturing a vehicle, the method comprising:
a preparation step of preparing an engine block capable of accommodating engine parts, and a motor unit including a motor and a motor housing accommodating the motor; and
a supporting step of supporting the motor unit with the engine block.

2. The method for manufacturing a vehicle according to claim 1, wherein
the engine block has an opening capable of supporting a crankshaft, and
in the supporting step, an output shaft of the motor unit is supported at the opening of the engine block.

3. The method for manufacturing a vehicle according to claim 1, wherein
the engine block has a mount portion connected to a vehicle body.

4. The method for manufacturing a vehicle according to claim 1, wherein
the supporting step is performed after removing at least a part of a plurality of crankshaft support walls provided inside the engine block.

5. The method for manufacturing a vehicle according to claim 1, wherein
the vehicle includes a heat exchanger,
the engine block includes a coolant flow path through which a coolant to be supplied to the heat exchanger flows,
the motor unit includes an oil flow path through which oil flows, and
the method for manufacturing a vehicle comprises a connecting step of connecting the oil flow path to the heat exchanger.

6. The method for manufacturing a vehicle according to claim 1, wherein
the engine block includes a piston accommodating portion capable of accommodating an engine piston, and
a fixing member is accommodated in the piston accommodating portion, and the motor housing of the motor unit is fixed to the fixing member such that the motor unit is supported by the engine block.

7. The method for manufacturing a vehicle according to claim 6, wherein
a damper structure for damping the fixing member in the piston accommodating portion is provided.
